# EUROPEAN PATENT APPLICATION

(11) **EP 4 830 834 A1**
(43) Date of publication of application: **28.10.2026**
(21) Application number: 24907426.1
(22) Date of filing: 17.12.2024
(51) Int. Cl.: B01J 23/80, B01J 23/72, B01J 23/75, B01J 23/78, B01J 23/89, B01J 23/745, B01J 23/755, B01J 23/825, B01J 23/835, B01J 23/889, C07B 61/00, C07C 29/154, C07C 29/156, C07C 31/08, C22C 9/00, C22C 9/01, C22C 9/02, C22C 9/04, C22C 9/05, C22C 9/06, C22C 9/10

(54) **COPPER ALLOY CATALYST**

(30) Priority: 20.12.2023 JP 2023214645; 08.11.2024 JP 2024195796
(71) Applicant: Mitsubishi Materials Corporation, Tokyo 100-8117 (JP)
(72) Inventor: ODAIRA, Takumi, Kitamoto-shi, Saitama 364-0028 (JP); SANO, Yosuke, Saitama-shi, Saitama 330-8508 (JP)
(74) Representative: Hoffmann Eitle
(86) International application number: PCT/JP2024/044650
(87) International publication number: WO 2025/135041

(57) **Abstract**

A copper alloy catalyst of the present invention includes: a bulk material of a copper alloy containing one or more alloying elements selected from Zn, Al, Ca, Mg, Ni, Si, Mn, In, Fe, Co, Ag, and Sn, and having a Cu content of 50 at% or more, in which, when a droplet of ion-exchanged water is deposited onto a surface of the bulk material, a contact angle measured by a θ/2 method is 95° or more.

## Description

### TECHNICAL FIELD

The present invention relates to a copper alloy catalyst used for producing ethanol through electroreduction of CO₂.

Priority is claimed on Japanese Patent Application No. 2023-214645, filed December 20, 2023, and Japanese Patent Application No. 2024-195796, filed November 8, 2024, the contents of which are incorporated herein by reference.

### BACKGROUND ART

In the present era of accelerating global warming, reduction of greenhouse gases (GHG), particularly atmospheric CO₂ gas, is a shared global challenge.

In recent years, development of a Carbon Dioxide Capture and Utilization (CCU) technology that utilizes atmospheric carbon dioxide as a raw material for useful chemical products has been accelerating. Carbon dioxide is a highly stable compound, with carbon in its highest oxidation state of +4 and a standard Gibbs energy of formation of approximately 400 kJ/mol. In order to convert carbon dioxide into useful chemical products, it is necessary to reduce carbon with a large amount of energy. There is a demand for development of a technology capable of reducing carbon dioxide in an energy-efficient manner.

In recent years, a co-electrolysis method using electrolytic cells formed of polymeric ion exchange membranes has been attracting attention (see, for example, Patent Documents 1 and 2). The co-electrolysis method is a technology in which electrolysis by an oxidation reaction at an anode and electrolysis by a reduction reaction at a cathode are carried out simultaneously in an electrochemical cell. For example, by using water at the anode and a KHCO₃ aqueous solution or CO₂ gas at the cathode as raw materials, CO₂ can be reduced by using protons generated by electrolysis of H₂O.

Here, when Cu is used as a catalyst, an organic compound (for example, ethanol) of C2 or higher can be obtained from CO₂ with a high faradaic efficiency.

Note that for the copper catalyst, an efficiency for production of the organic compound of C2 or higher decreases in bulk materials; therefore, the copper catalyst has been provided in the form of powders or sputtered thin films in the related art.

In addition, Non Patent Document 1 reports that, in a copper catalyst formed of a sputtered thin film, by forming a polymer film on a surface to enhance water repellency, an organic compound of C2 or higher can be produced from CO₂ with a higher faradaic efficiency.

### Citation List

### Patent Documents

Patent Document 1: Japanese Unexamined Patent Application, First Publication No. 2022-049861
Patent Document 2: Japanese Unexamined Patent Application, First Publication No. 2022-040803

### Non Patent Document

Non Patent Document 1: Yan Lin et al., Nature Communications, (2023) 14:3575

### SUMMARY OF INVENTION

### Technical Problem

Incidentally, it is known that incorporation of specific alloying elements into a copper catalyst improves catalytic properties. However, in powders or sputtered thin films in the related art, alloying elements cannot be uniformly mixed, thereby limiting full realization of an effect of improving catalytic properties through alloying.

In addition, the copper catalyst formed of powders or sputtered thin films has problems in that handleability is poor, cost is high, and an energy efficiency during manufacturing is low.

Further, in Non Patent Document 1, water repellency is enhanced by forming a polymer film on a surface of a sputtered thin film, but there are problems in that process cost is high and stability is poor.

The present invention has been made in view of the above circumstances, and an objective of the present invention is to provide a copper alloy catalyst which is formed of a bulk material that is easy to handle and which is capable of producing an organic compound of C2 or higher from CO₂ with a high faradaic efficiency.

### Solution to Problem

In order to solve such a problem and achieve the above objective, according to Aspect 1 of the present invention, there is provided a copper alloy catalyst including: a bulk material of a copper alloy containing one or more alloying elements selected from Zn, Al, Ca, Mg, Ni, Si, Mn, In, Fe, Co, Ag, and Sn, and having a Cu content of 50 at% or more, in which, when a droplet of ion-exchanged water is deposited onto a surface of the bulk material, a contact angle measured by a θ/2 method is 95° or more.

With the copper alloy catalyst according to Aspect 1 of the present invention, the catalyst is made of a bulk material of a copper alloy containing one or more alloying elements selected from Zn, Al, Ca, Mg, Ni, Si, Mn, In, Fe, Co, Ag, and Sn, and having a Cu content of 50 at% or more. This configuration ensures superior handleability and makes it possible to sufficiently realize the improved catalytic properties derived from alloying. In addition, when a droplet of ion-exchanged water is deposited onto the surface of the bulk material, the contact angle measured by the θ/2 method is 95° or more. This configuration ensures enhanced water repellency and makes it possible to produce an organic compound of C2 or higher from CO₂ with a high faradaic efficiency.

According to Aspect 2 of the present invention, in the copper alloy catalyst according to Aspect 1, a developed interfacial area ratio Sdr of the surface of the bulk material is 1% or more.

With the copper alloy catalyst according to Aspect 2 of the present invention, the developed interfacial area ratio Sdr of the surface of the bulk material is 1% or more, and fine roughness is formed on a surface layer. This configuration improves not only reactivity but also water repellency and makes it possible to produce an organic compound of C2 or higher from CO₂ with a high faradaic efficiency.

According to Aspect 3 of the present invention, in the copper alloy catalyst according to Aspect 1 or 2, when a measurement area of 5000 µm² or more is measured at a step size of 0.1 µm by an EBSD method, an average value of KAM is 0.30° or more after excluding a measurement point with a CI value of 0.1 or less as analyzed by data analysis software OIM.

With the copper alloy catalyst according to Aspect 3 of the present invention, since the average value of the KAM is 0.30° or more, strain energy is accumulated, and reactivity can be improved.

According to Aspect 4 of the present invention, in the copper alloy catalyst according to any one of Aspects 1 to 3, the bulk material contains 2 at% or more of one or more alloying elements selected from Zn, Al, Ca, and Mg, and a surface layer of the bulk material is a surface-treated layer that has been treated with an acidic or basic solution.

With the copper alloy catalyst according to Aspect 4 of the present invention, since the bulk material contains 2 at% or more of one or more alloying elements selected from Zn, Al, Ca, and Mg, and the surface layer of the bulk material is a surface-treated layer that has been treated with an acidic or basic solution, Zn, Al, Ca, and Mg, which are metals with a lower reduction potential than copper, are preferentially dissolved, a fine structure is formed on the surface layer, water repellency is enhanced, and it is possible to produce an organic compound of C2 or higher from CO₂ with a high faradaic efficiency.

According to Aspect 5 of the present invention, in the copper alloy catalyst according to any one of Aspects 1 to 4, a faradaic efficiency for ethanol production is 0.8% or more.

With the copper alloy catalyst according to Aspect 5 of the present invention, the faradaic efficiency for ethanol production is as high as 0.8% or more, and ethanol can be efficiently produced.

An electrochemical reaction device according to Aspect 6 of the present invention uses the copper alloy catalyst according to any one of Aspects 1 to 5 of the present invention.

With the electrochemical reaction device according to Aspect 6 of the present invention, since the copper alloy catalyst according to any one of Aspects 1 to 5 of the present invention is used, it is possible to produce an organic compound of C2 or higher from CO₂ with a high faradaic efficiency.

### Advantageous Effects of Invention

According to the present invention, it is possible to provide a copper alloy catalyst which is formed of a bulk material that is easy to handle and which is capable of producing an organic compound of C2 or higher from CO₂ with a high faradaic efficiency.

### BRIEF DESCRIPTION OF DRAWINGS

[FIG. 1A] An explanatory view showing an example in which a copper alloy catalyst according to an embodiment of the present invention is a mesh material obtained by processing a copper alloy wire material.
[FIG. 1B] An explanatory view showing an example in which the copper alloy catalyst according to the embodiment of the present invention is a punching metal in which a plurality of holes are formed in a copper alloy plate.
[FIG. 2] A flowchart showing an example of a method for producing the copper alloy catalyst according to the present embodiment.
[FIG. 3] An explanatory view showing an example of an electrochemical reaction device using the copper alloy catalyst according to the embodiment of the present invention.

### DESCRIPTION OF EMBODIMENTS

Hereinafter, a copper alloy catalyst and an electrochemical reaction device according to an embodiment of the present invention will be described with reference to the accompanying drawings.

A copper alloy catalyst 10 according to the present embodiment is used, for example, in an electrochemical reaction device that electro-reduces CO₂ gas to produce an organic compound of C2 or higher (organic compound having two or more carbon atoms).

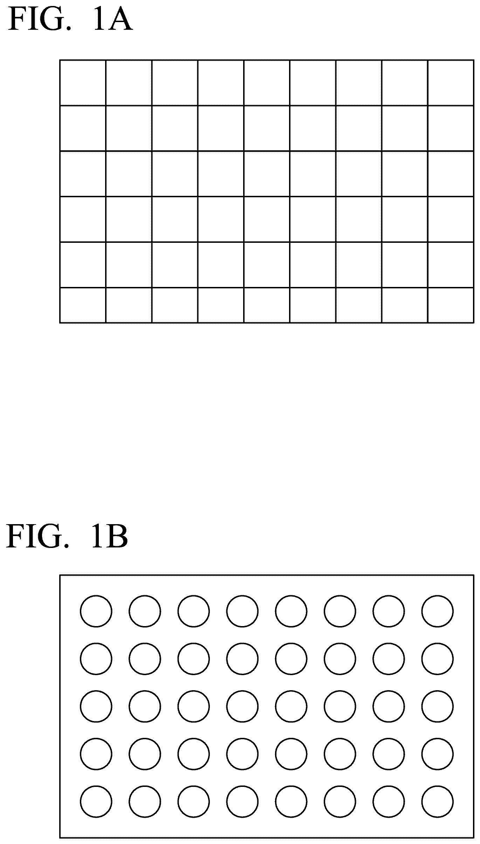

As shown in FIGS. 1A and 1B, the copper alloy catalyst 10 according to the present embodiment is a bulk material having a substantially rectangular shape. FIG. 1A is a mesh material obtained by processing a copper alloy wire material, and FIG. 1B is a punching metal in which a plurality of holes are formed in a copper alloy plate.

The copper alloy catalyst 10 according to the present embodiment is made of a copper alloy containing one or more alloying elements selected from Zn, Al, Ca, Mg, Ni, Si, Mn, In, Fe, Co, Ag, and Sn, and having a Cu content of 50 at% or more.

In addition, in the copper alloy catalyst 10 according to the present embodiment, it is preferable that a developed interfacial area ratio Sdr of a surface of the bulk material be 1% or more.

Further, in the copper alloy catalyst 10 according to the present embodiment, it is preferable that, when a measurement area of 5000 µm² or more is measured at a step size of 0.1 µm by an EBSD method, an average value of KAM be 0.30° or more after excluding a measurement point with a CI value of 0.1 or less as analyzed by data analysis software OIM.

In addition, in the copper alloy catalyst 10 according to the present embodiment, it is preferable that the bulk material contain 2 at% or more of one or more alloying elements selected from Zn, Al, Ca, and Mg, and a surface layer of the bulk material be a surface-treated layer that has been treated with an acidic or basic solution.

Further, in the copper alloy catalyst 10 according to the present embodiment, it is preferable that a faradaic efficiency for ethanol production be 0.8% or more.

Hereinafter, in the copper alloy catalyst 10 according to the present embodiment, the reason why the composition, contact angle of water, average value of KAM, surface-treated layer, faradaic efficiency for ethanol production, and ratio of the faradaic efficiency for formic acid production to the faradaic efficiency for ethanol production are defined as described above will be described.

### (Alloying Element: One or More Selected from Zn, Al, Ca, Mg, Ni, Si, Mn, In, Fe, Co, Ag, and Sn)

In the copper alloy catalyst 10 formed of the copper alloy containing the above-described alloying elements, a CO₂ decomposition reaction and an ethanol production reaction that occur on a surface of the catalyst are promoted, thereby improving the efficiency of ethanol production. Here, in the present embodiment, the copper alloy catalyst 10 is a bulk material, so that the alloying elements are uniformly dispersed, resulting in stable catalytic properties.

The total content of the above-described alloying elements is preferably 0.03 at% or more, and more preferably 1.00 at% or more.

### (Cu Content: 50 at% or more)

As described above, the efficiency of ethanol production is improved by containing the alloying elements, but, when the Cu content is less than 50 at%, there is a concern that the catalyst characteristics of the Cu itself cannot be obtained. Therefore, in the present embodiment, the Cu content is set to 50 at% or more.

The Cu content is preferably 52 at% or more, and more preferably 55 at% or more.

### (Contact Angle of Water: 95° or more)

When a droplet of ion-exchanged water is deposited onto a surface of the copper alloy catalyst 10 made of a bulk material, in a case where a contact angle measured by a θ/2 method is 95° or more, the copper alloy catalyst 10 has sufficient water repellency, gas-liquid reaction sites are secured, the reaction can be promoted, and the efficiency of ethanol production is improved.

The contact angle of water is preferably 97° or more, and more preferably 100° or more. The contact angle of water may be, for example, 175° or less, or 170° or less.

### (Developed Interfacial Area Ratio Sdr of Surface: 1% or more)

The developed interfacial area ratio Sdr is a value indicating an increment of a developed interfacial area of a measurement region relative to an area of the measurement region. A completely flat surface has an Sdr of 0, and the larger the Sdr, the larger the surface area of the material.

When the Sdr is 1% or more, the surface area where the CO₂ decomposition reaction occurs increases, and the reactivity can be improved. Further, the fact that the developed interfacial area ratio Sdr is as large as 1% or more also means that a fine shape is formed on the surface layer, and the water repellency can be improved, so that the efficiency for production of a high-value-added organic compound of C2 or higher can be improved.

The Sdr may be, for example, 200% or less, or 190% or less.

The developed interfacial area ratio Sdr of the surface of the copper alloy catalyst 10 made of a bulk material is more preferably 1.5% or more, and still more preferably 2.0% or more.

### (Average Value of KAM: 0.30° or more)

A Kernel Average Misorientation (KAM) value measured by EBSD is a value calculated by averaging a misorientation between one pixel and pixels surrounding the one pixel. Since the shape of the pixel is a regular hexagon, when the degree of proximity is set to 1, an average value of misorientations with six adjacent pixels is calculated as the KAM value. By using the KAM value, a local misorientation, that is, a distribution of strain can be visualized.

By setting the average value of the KAM to 0.30° or more, strain energy is accumulated on a material surface, and the reactivity can be improved.

In addition, as will be described below, when the surface layer of the bulk material is treated with a basic solution or an acidic solution, a fine structure is easily formed, and the water repellency is improved.

The average value of the KAM described above is more preferably 0.35° or more, and still more preferably 0.40° or more.

In addition, the average value of the KAM may be 3.0° or less, or 2.50° or less.

### (Surface-Treated Layer)

In the present embodiment, when the bulk material contains 2 at% or more of one or more alloying elements selected from Zn, Al, Ca, and Mg, and the surface layer of the bulk material is a surface-treated layer that has been treated with an acidic or basic solution, one or more alloying elements selected from Zn, Al, Ca, and Mg with a lower reduction potential than copper are preferentially dissolved by the surface layer treatment, a fine structure is formed on the surface layer of the bulk material, and the water repellency is improved.

### (Faradaic Efficiency for Ethanol Production)

In the present embodiment, when the faradaic efficiency for ethanol production is 0.8% or more, application to a catalyst for converting carbon dioxide into useful chemical products can be expected.

The faradaic efficiency for ethanol production is more preferably 1.0% or more, and still more preferably 1.2% or more.

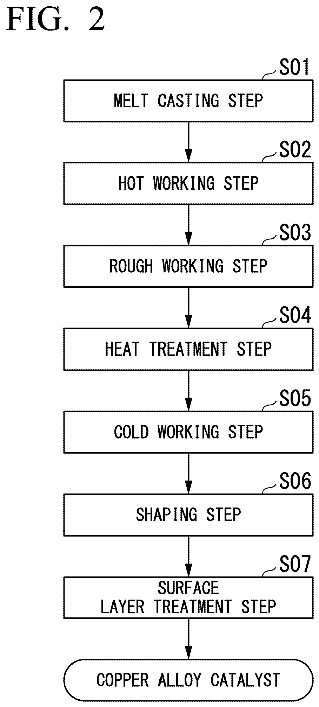

Next, an example of a method for producing the copper alloy catalyst according to the present embodiment having such a configuration will be described with reference to a flowchart shown in FIG. 2.

### (Melt Casting Step S01)

First, the above-described elements are added to molten copper obtained by melting an oxygen-free copper raw material to adjust the composition, thereby producing a molten copper alloy. In the addition of various elements, a single element, a mother alloy, or the like can be used. In addition, a raw material containing the above-described elements may be melted together with a copper raw material. Here, it is preferable that each element be so-called 3N copper having a purity of 99.9 mass% or more or so-called 4N copper having a purity of 99.99 mass% or more.

In the melting step, in order to reduce the hydrogen concentration, it is preferable that atmosphere melting be performed in an inert gas atmosphere (for example, Ar gas) in which a vapor pressure of H₂O is low, and a retention time during the melting be kept to a minimum.

The molten copper alloy with the adjusted composition is then poured into a mold to produce an ingot. When mass production is taken into consideration, it is preferable to use a continuous casting method or a semi-continuous casting method.

### (Hot Working Step S02)

By performing hot working on the obtained ingot, strain is introduced and the shape is deformed to a predetermined size. By introducing strain through hot working, it is possible to apply high strain while the grains are coarse, thereby improving the homogeneity of the material.

The total working ratio here needs to be a certain level because it is necessary to destroy a cast structure, and is preferably 50% or more, more preferably 55% or more, and still more preferably 60% or more.

The plastic working method is not particularly limited, but, when the final shape is a foil or a strip, it is preferable to adopt rolling. When the final shape is a wire, it is preferable to adopt extrusion or groove rolling, and, when the final shape is a bulk shape, it is preferable to adopt forging or pressing.

### (Rough Working Step S03)

Next, by performing rough working on the obtained hot-worked material, strain is introduced and the shape is deformed to a predetermined size.

Here, the working method is not particularly limited, but, when the final shape is a foil or a strip, rolling is adopted, and, when the final shape is a rod or a wire, extrusion or groove rolling is adopted. A temperature during working is not particularly limited, but is preferably -200°C to 400°C, that is a cold-to-warm working temperature range. The total working ratio is not particularly limited, but is preferably 30% or more for the efficiency of rough working.

### (Heat Treatment Step S04)

For homogenization and/or solution treatment, a heat treatment is performed in an Ar gas atmosphere, and water quenching is performed.

Here, the heat treatment method is not particularly limited, but may be performed in a non-oxidizing or reducing atmosphere. The heat treatment temperature is not particularly limited, but, when the temperature is low, a large amount of precipitates may be generated, thereby making the working step difficult. In addition to the possibility that recovery and recrystallization may not sufficiently occur, inadequate diffusion may cause concentration fluctuations of the added elements; therefore, the heat treatment temperature is preferably 400°C or higher. Also, in a case where the temperature becomes too high, it may exceed the melting point of the material; therefore; the heat treatment temperature needs to be 1000°C or lower.

The cooling method needs to be a method, such as water quenching, in which a cooling rate is 200 °C/min. When the cooling rate is slow, precipitates may appear during cooling. In addition, in order to further improve the efficiency of rough working and to homogenize texture, hot working may be carried out after the heat treatment. The working method is not particularly limited, but, when the final shape is a foil or a strip, rolling is adopted, and, when the final shape is a rod or a wire, extrusion or groove rolling is adopted. The rough working step S03 and the heat treatment step S04 may be repeatedly performed.

### (Cold Working Step S05)

Next, the copper material after the heat treatment step S04 is subjected to cold working at a working ratio of 50% or more to accumulate high energy on a surface of the copper material.

In order to prevent the release of energy due to dynamic recrystallization and recovery, working is performed at -200°C to 200°C. The working method is not particularly limited, but, when the final shape is a foil or a strip, rolling is adopted, and, when the final shape is a wire, wire drawing or the like is adopted.

The final thickness and wire diameter are not particularly limited, but can be applied to, for example, a thickness and wire diameter of 1 mm, 0.5 mm, 0.1 mm, 0.05 mm, or 0.01 mm. In addition, a heat treatment may be performed for tempering after the cold working.

### (Shaping Step S06)

Working is performed to form a flow passage for the flow of a raw material gas or a solution required for a catalytic reaction. The working method is not limited, but, for a foil or a strip, punching, expanded metal working, or the like is adopted. For a wire material, a mesh shape or the like can be adopted.

### (Surface Layer Treatment Step S07)

Next, the surface layer treatment is performed by immersing the obtained material in an acidic or basic solution. When the copper material contains 2 at% or more of one or more alloying elements selected from Zn, Al, Ca, and Mg, which are metals with a lower reduction potential than Cu, the metals with a lower reduction potential than Cu are preferentially dissolved, a fine structure is formed on the surface layer, and the contact angle on the surface is increased.

The acid solution is not particularly limited, but nitric acid, sulfuric acid, hydrochloric acid, or the like can be used. The basic solution is not particularly limited, but sodium hydroxide, an ammonia solution, or the like can be used.

The copper alloy catalyst according to the present embodiment is produced by the above-described steps.

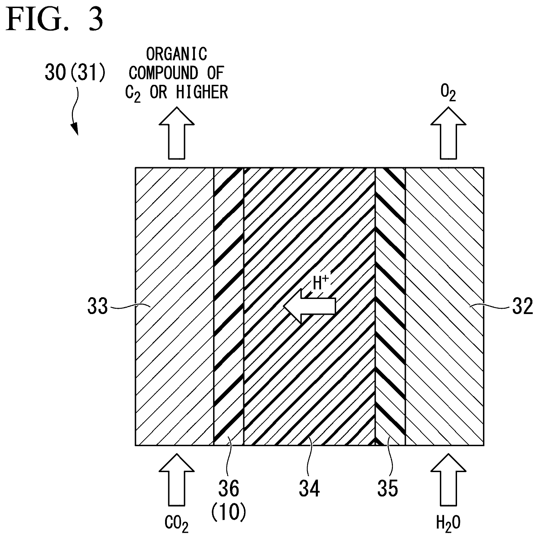

Next, FIG. 3 shows a schematic diagram of an electrochemical reaction device 30 using the copper alloy catalyst 10 according to the present embodiment. The electrochemical reaction device 30 according to the present embodiment is a solid polymer type co-electrolysis device.

As shown in FIG. 3, the electrochemical reaction device 30 according to the present embodiment includes an electrolysis cell 31 including an anode electrode 32 and a cathode electrode 33 that are arranged opposite each other, an ion-transmitting membrane 34 that is arranged between the anode electrode 32 and the cathode electrode 33, and catalyst layers 35 and 36.

Here, for the anode electrode 32, the cathode electrode 33, the ion-transmitting membrane 34, and the catalyst layer 35, those used in a general solid polymer type water electrolysis device in the related art can be applied.

The catalyst layer 36 disposed on the cathode electrode 33 side described above is formed of the copper alloy catalyst 10 according to the present embodiment.

In the electrochemical reaction device 30 (electrolysis cell 31) described above, as shown in FIG. 3, water (H₂O) is supplied to the anode electrode 32 side, and CO₂ is supplied to the cathode electrode 33 side. Then, the anode electrode 32 and the cathode electrode 33 are energized.

Then, water is electrolyzed at the anode electrode 32, and produced oxygen (O₂) is discharged from the anode electrode 32, and hydrogen (H₂) moves to the cathode electrode 33.

Then, CO₂ is reduced at the cathode electrode 33, and an organic compound of C2 or higher, such as ethanol, is produced.

The produced organic compound of C2 or higher, such as ethanol, is discharged to the outside of the electrolysis cell 31 via a pore portion 13 of a member body 11.

With the copper alloy catalyst 10 according to the present embodiment having the above-described configuration, the catalyst is made of a bulk material of a copper alloy containing one or more alloying elements selected from Zn, Al, Ca, Mg, Ni, Si, Mn, In, Fe, Co, Ag, and Sn, and having a Cu content of 50 at% or more. This configuration ensures superior handleability and makes it possible to sufficiently realize the improved catalytic properties derived from alloying.

In addition, when a droplet of ion-exchanged water is deposited onto the surface of the bulk material, the contact angle measured by the θ/2 method is 95° or more. This configuration ensures enhanced water repellency and makes it possible to produce an organic compound of C2 or higher from CO₂ with a high faradaic efficiency.

In the present embodiment, when the developed interfacial area ratio Sdr of the surface of the bulk material constituting the copper alloy catalyst 10 is 1% or more, fine roughness is formed on a surface layer of the bulk material. This configuration improves not only reactivity but also water repellency and makes it possible to produce an organic compound of C2 or higher from CO₂ with a high faradaic efficiency.

In the present embodiment, when a measurement area of 5000 µm² or more is measured at a step size of 0.1 µm by an EBSD method, and an average value of KAM is 0.30° or more after excluding a measurement point with a CI value of 0.1 or less as analyzed by data analysis software OIM, strain energy is accumulated within the bulk material, the reactivity can be improved, and it is possible to produce an organic compound of C2 or higher from CO₂ with a high faradaic efficiency.

In the present embodiment, when the bulk material contains 2 at% or more of one or more alloying elements selected from Zn, Al, Ca, and Mg, and the surface layer of the bulk material is a surface-treated layer that has been treated with an acidic or basic solution, Zn, Al, Ca, and Mg, which are metals with a lower reduction potential than copper, are preferentially dissolved, a fine structure is formed on the surface layer, water repellency is enhanced, and it is possible to produce an organic compound of C2 or higher from CO₂ with a high faradaic efficiency.

In the present embodiment, when the faradaic efficiency for ethanol production is 0.8% or more, ethanol can be reliably and efficiently produced.

With the electrochemical reaction device 30 according to the present embodiment, since the copper alloy catalyst 10 according to the present embodiment is used as the catalyst layer 36 disposed on the cathode electrode 33 side, it is possible to produce an organic compound of C2 or higher from CO₂ with a high faradaic efficiency.

Hereinabove, the embodiment of the present invention has been described. However, the present invention is not limited to this and can be modified as appropriate without departing from the technical idea of the invention.

### Examples

Hereinafter, results of confirmation experiments conducted to confirm the effects of the present invention will be described.

A raw material formed of pure copper having a purity of 99.999 mass% or more, which was refined by a zone melting refining method, and each additive element having a purity of 99.9% or more were prepared, and these were charged into a high-purity graphite crucible and subjected to induction melting in an atmosphere furnace under an Ar gas atmosphere. The chemical compositions were adjusted as shown in Table 1, and the molten metal was poured into a heat insulating material (isowool) mold to produce an ingot. The size of the ingot was set to a thickness of about 15 mm × a width of about 50 mm × a length of about 150 to 200 mm.

The obtained ingot was heated in an Ar gas atmosphere at a temperature shown in Table 2 for 4 hours, and hot-rolled at a working ratio shown in Table 2. A final pass temperature was confirmed by measuring a final temperature of the hot rolling with a radiation thermometer.

Next, the surface was ground to remove oxide coating formed by the hot rolling, and the material was cut to have a predetermined size.

Thereafter, the thickness was appropriately adjusted to have a final thickness, and the material was cut. Each of the cut hot-rolled samples was repeatedly subjected to rough working and heat treatment under the conditions shown in Table 1, and then further subjected to cold rolling to produce a foil material having a thickness of 0.04 to 0.06 mm and a width of about 50 mm.

In addition, casting was performed in the same manner as described above to produce an ingot having a diameter of 15 mm × a length of about 150 to 200 mm.

The ingot was subjected to hot working, heat treatment, and cold working under the conditions shown in Table 2 to produce a copper alloy wire material having a wire diameter of 0.09 mm.

As a shaping step, the obtained copper alloy foil material was subjected to punching. A hole diameter was set to about 0.6 mm, and a pitch was set to 1.5 mm.

The obtained copper alloy wire material was processed into a mesh having a mesh number of 120 and a mesh size of 0.12 mm.

Then, the obtained punched metal and mesh material were immersed in an acidic or basic solution shown in Table 2, and subjected to a surface layer treatment under the conditions shown in Table 1.

The copper alloy catalyst obtained by the above-described steps was evaluated for the component composition, contact angle on the surface, developed interfacial area ratio Sdr, average value of KAM, and carbon dioxide reduction property in the following procedure. The evaluation results are shown in Table 3.

### (Component Composition)

A measurement sample was taken from the obtained ingot and measured using an inductively coupled plasma (ICP) emission spectrometer.

### (Contact Angle)

2 µL of ion-exchanged water was added dropwise to the copper alloy catalyst (copper alloy foil material or mesh material) using a contact angle meter (DMo-702 manufactured by Kyowa Interface Science Co., Ltd.), and a contact angle after 1 second was measured.

A θ/2 method was used to measure the contact angle. The measurement environment was set to a temperature of 23±5°C and a humidity of 65%±10%. After the surface treatment, the sample was washed with ethanol, dried in atmosphere air for at least one day, and measured within 30 days. The measurement was performed 5 times or more, and an average value thereof was taken as the contact angle.

### (Developed Interfacial Area Ratio)

The developed interfacial area ratio was measured using a laser microscope (OLS5100 manufactured by OLYMPUS Corporation). The developed interfacial area ratio Sdr was obtained by measuring an area of 0.01 mm² or more in three or more visual fields.

In this case, a λc filter for defining a boundary between a roughness component and a waviness component was set to 25 µm, and a wavelength component longer than 80 µm was removed to calculate the developed interfacial area ratio. An average value of each visual field was taken as the developed interfacial area ratio Sdr.

### (Average Value of KAM)

A sample was cut out from the copper alloy catalyst (copper alloy foil material or mesh material), and a cross section perpendicular to a working direction for the foil material and a cross section in a wire material working direction for the mesh material were mechanically polished using waterproof abrasive paper and diamond abrasives, and then finish polished using a colloidal silica solution.

The sample was measured using an EBSD measurement device (Quanta FEG 450 manufactured by FEI Company, OIM Data Collection manufactured by EDAX/TSL (currently AMETEK, Inc.)) and analysis software (OIM Data Analysis ver. 8.6 manufactured by EDAX/TSL (currently AMETEK, Inc.)) at an electron beam acceleration voltage of 15 kV, a step size of 0.1 µm , and a measurement area of 5000 µm² or more, and an average value thereof was calculated from the KAM value of each pixel, excluding a measurement point with a CI value of 0.1 or less.

### (Carbon Dioxide Reduction Test)

The obtained sample of each example was incorporated into a cathode of a 1 cm²-class electrochemical cell including an anion exchange type ion exchange membrane, and the current density was controlled to flow between electrodes at 16 mA/cm² using a potentiostat/galvanostat (HCP-803 manufactured by BioLogic). As an anode electrode, a titanium porous body plated with iridium oxide was used. Pure water serving as a raw material was fed to the anode at a rate of 10 cc/min using a precision diaphragm pump (Smoothflow Pump Q series manufactured by TACMINA CORPORATION). Pure CO₂ gas was supplied to the cathode at a flow rate of 10 cc/min controlled by a mass flow controller (manufactured by KOFLOC), and a 0.1 M aqueous KHCO₃ solution was fed at 1 cc/min using a precision diaphragm pump (KP21, FLOM).

### (Faradaic Efficiency for Ethanol Production)

The post-reduction solution discharged from the cathode was separated from the gas, and the ethanol concentration contained in the resulting liquid was measured by a high-speed liquid chromatograph (Extrema manufactured by JASCO Corporation). The ethanol concentration obtained by the high-speed liquid chromatograph was denoted by C, and a faradaic efficiency FE was calculated from the following equation. $FE = n \times C \times F / \left(I\times t\times M\right)$

Here,
I (A): constant current flowing through the electrode during electrolysis,
t (s): electrolysis time,
C (g/L): concentration of ethanol measured by high-speed liquid chromatograph,
F (As/mol): Faraday constant,
n: the number of reaction electrons (12 in CO₂ → ethanol production reaction), and
M (g/mol): molecular weight.

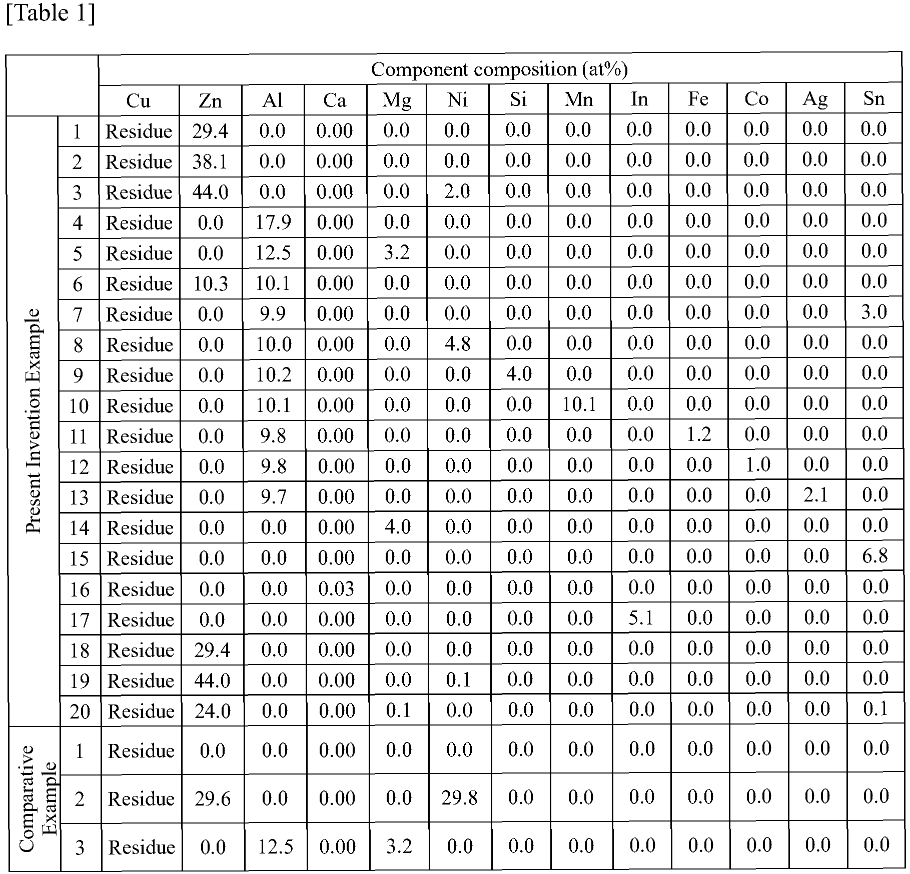

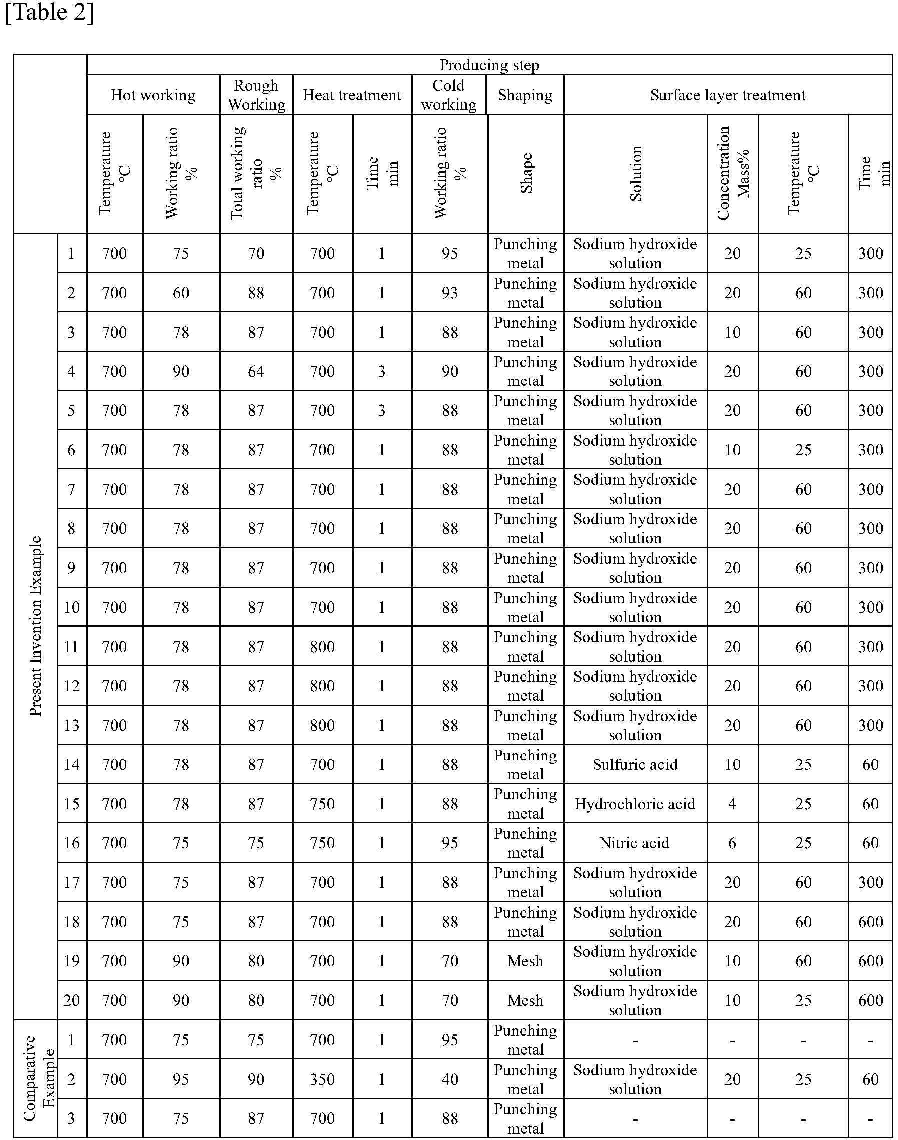

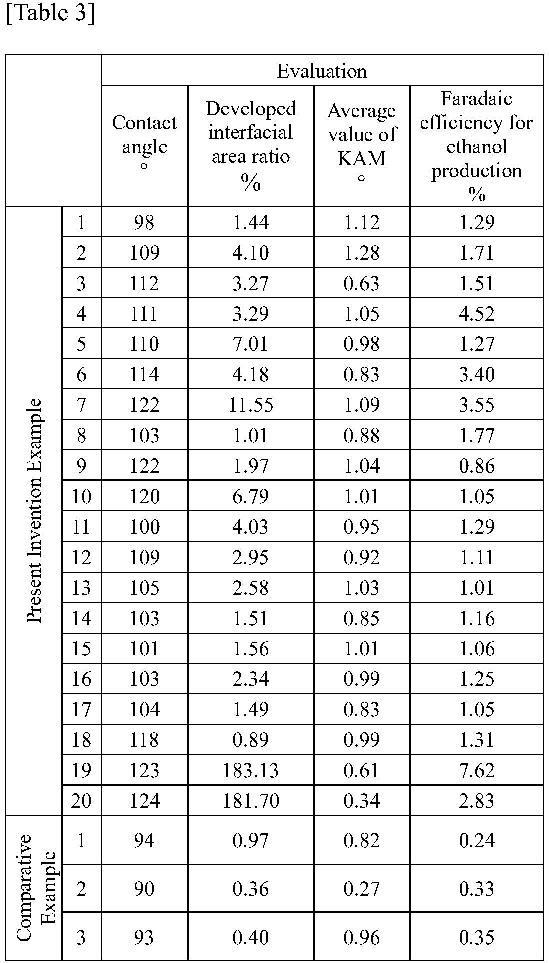

In Comparative Example 1, the material was made of pure copper, the contact angle of the surface was as small as 94°, and the faradaic efficiency for ethanol production was as low as 0.24%.

In Comparative Example 2, the material was made of a copper alloy containing Zn and Ni, but the Cu content was less than 50%, the contact angle of the surface was as small as 90°, and the faradaic efficiency for ethanol production was as low as 0.33%.

In Comparative Example 3, the material was made of a copper alloy containing Al and Mg, but the contact angle of the surface was as small as 90°, and the faradaic efficiency for ethanol production was as low as 0.35%.

On the other hand, in Present Invention Examples 1 to 20, the material was made of a copper alloy containing one or more alloying elements selected from Zn, Al, Ca, Mg, Ni, Si, Mn, In, Fe, Co, Ag, and Sn and having a Cu content of 50 at% or more, the contact angle of the surface was 95° or more, the efficiency of ethanol production was as high as 0.86% or more, and it was possible to efficiently produce ethanol by reducing CO₂.

From the results of the above-described confirmation experiments, it was confirmed that, according to the present invention examples, it is possible to provide a copper alloy catalyst which is formed of a bulk material that is easy to handle and which is capable of producing an organic compound of C2 or higher from CO₂ with a high faradaic efficiency.

### INDUSTRIAL APPLICABILITY

According to the present invention, it is possible to provide a copper alloy catalyst which is formed of a bulk material that is easy to handle and which is capable of producing an organic compound of C2 or higher from CO₂ with a high faradaic efficiency.

### REFERENCE SIGNS LIST

10 Copper alloy catalyst
30 Electrochemical reaction device
31 Electrolysis cell
32 Anode electrode
33 Cathode electrode
34 Ion-transmitting membrane
35, 36 Catalyst layer

## Claims

1. A copper alloy catalyst comprising:
a bulk material of a copper alloy containing one or more alloying elements selected from Zn, Al, Ca, Mg, Ni, Si, Mn, In, Fe, Co, Ag, and Sn, and having a Cu content of 50 at% or more,
wherein, when a droplet of ion-exchanged water is deposited onto a surface of the bulk material, a contact angle measured by a θ/2 method is 95° or more.

2. The copper alloy catalyst according to Claim 1,
wherein a developed interfacial area ratio Sdr of the surface of the bulk material is 1% or more.

3. The copper alloy catalyst according to Claim 1,
wherein, when a measurement area of 5000 µm² or more is measured at a step size of 0.1 µm by an EBSD method, an average value of KAM is 0.30° or more after excluding a measurement point with a CI value of 0.1 or less as analyzed by data analysis software OIM.

4. The copper alloy catalyst according to Claim 1,
wherein the bulk material contains 2 at% or more of one or more alloying elements selected from Zn, Al, Ca, and Mg, and a surface layer of the bulk material is a surface-treated layer that has been treated with an acidic or basic solution.

5. The copper alloy catalyst according to Claim 1,
wherein a faradaic efficiency for ethanol production is 0.8% or more.

6. An electrochemical reaction device that uses the copper alloy catalyst according to any one of Claims 1 to 5.
